# EUROPEAN PATENT APPLICATION

(11) **EP 1 199 654 A1**
(43) Date of publication of application: **24.04.2002**
(21) Application number: 01109401.8
(22) Date of filing: 19.04.2001
(51) Int. Cl.: G06F 17/60

(54) **Network based employee benefit system**

(30) Priority: 28.04.2000 KR 2000022806
(71) Applicant: Exanadu Corporation, Seodaemun-ku, Seoul (KR)
(72) Inventor: Jang, Boo-Chan, Mapo-ku, Seoul (KR)
(74) Representative: Kügele, Bernhard

(57) **Abstract**

A network based electronic commerce server includes an employee data base containing information about employees of a predetermined company, a product data base containing information about a plurality of products, and a control module for receiving cyber money provided by the company to an employee, the cyber money to be used by the employee listed in the employee data base to purchase a product listed in the product data base online. Thus, the efficiency of a benefit system provided by the company is improved, and also, the employees will be more satisfied with the company.

## Description

### BACKGROUND OF THE INVENTION

### 1. Field of the Invention

The present invention relates to a network based employee benefit system, and more particularly, to an electronic commerce server, an electronic commerce method, a settlement server, and a settlement method for providing a benefit service for employees of a predetermined company based on a network.

### 2. Description of the Related Art

In general, companies adopt various kinds of employee benefit systems to improve working conditions and to boost the moral and in turn the productivity of the employees.. A typical benefit system is an in-house store or franchised store system at which employees can purchase various kinds of products at low prices. Most in-house stores or franchised stores operated by the company are located offline at different places and are independently operated according to the sorts of products they carry . Accordingly, it is inconvenient for an employee to visit in-house stores or franchised stores in person to purchase necessary products. Further, since the stores do not provide all products that ordinary stores provide, and since the in-house store or franchised store system is not widespread, the needs of the employees are not satisfied.

### SUMMARY OF THE INVENTION

To solve the above problems, it is an objective of the present invention to provide an electronic commerce server, an electronic commerce method, a settlement server, and a settlement method based on a network, by which an efficient employee benefit system of a company can be provided.

Another goal of the present invention is to provide an electronic commerce server, an electronic commerce method, a settlement server, and a settlement method based on a network, by which employees can conveniently purchase desired products.

It is yet another objective of the present invention to provide an electronic commerce server, an electronic commerce method, a settlement server, and a settlement method based on a network, by which employees can conveniently settle product prices.

Accordingly, to achieve these objectives, a network based electronic commerce server is provided which comprises an employee data base containing information about employees of a predetermined company, a product data base containing numerous product information and a control module for receiving cyber money provided by the company to an employee, the cyber money to be used by the employee listed in the employee data base to purchase a product listed in the product data base online.

Also, to achieve the above objectives, a network based electronic commerce method is provided which is achieved by transmitting information about the product offerings to an employee of a company's network connecting means, receiving a request by the employee to purchase at least one product among the products from the network connecting means, and receiving cyber money provided to the employee by the company as at least part of the money required for settlement of the price of the product.

### BRIEF DESCRIPTION OF THE DRAWINGS

The objectives and advantages of the present invention will become more apparent by describing in detail the preferred embodiments thereof with reference to the attached drawings in which:
FIG. 1 is a diagram of an Internet based employee benefit system adopting an electronic commerce server and a settlement server according to a first preferred embodiment of the present invention;
FIG. 2 is a detailed block diagram of the electronic commerce server of FIG. 1;
FIG. 3 is a detailed block diagram of the settlement server of FIG. 1;
FIG. 4 is a flow chart explaining the process of an employee logging into the electronic commerce server and deciding to purchase a product;
FIG. 5 is a flow chart explaining the steps of the settlement of product prices performed at the electronic commerce server;
FIG. 6 is a flow chart explaining the steps of the settlement of product prices performed at the settlement server;
FIG. 7 is a flow chart explaining in detail the steps of the benefit account settlement by the settlement server;
FIG. 8 is a flow chart explaining in detail the steps of the virtual wages account settlement by the settlement server;
FIG. 9 is a flow chart explaining the steps of the settlement of accounts between the electronic commerce server and the company server;
FIG. 10 is a flow chart explaining the steps of the company server accessing the settlement server and checking the details of the money received to and drawn from the company virtual account 31a;
FIG. 11 is a flow chart explaining the steps of the settlement performed at the electronic commerce server as a modified example of the first preferred embodiment of the present invention; and
FIG. 12 is a diagram of an Internet based employee benefit system adopting an electronic commerce server according to a second preferred embodiment of the present invention.

### DETAILED DESCRIPTION OF THE INVENTION

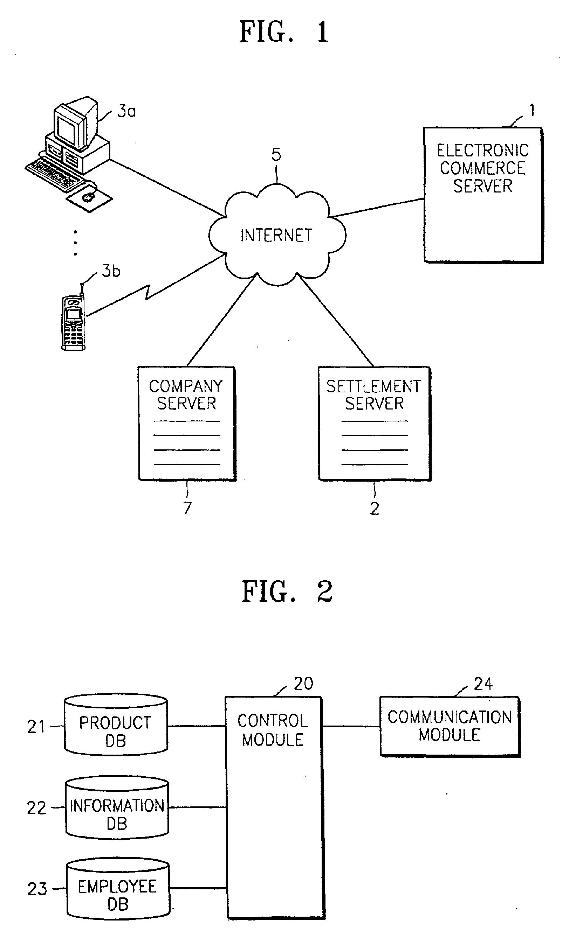

FIG. 1 is a view for showing an Internet based employee benefit system adopting an electronic commerce server and a settlement server according to a first preferred embodiment of the present invention.

Referring to the drawing, the Internet based employee benefit system entails employees connecting to the Internet (means 3a and 3b), an electronic commerce server 1 for selling products over the Internet 5, a company server 7 for providing "cyber money", virtual currency used on the Internet, and a settlement server 2 for the settlement of product prices.

The Internet connect 3a and 3b may be a PC or mobile phone for connecting to the electronic commerce server 1 through the Internet 5. The electronic commerce server 1 is provided with an application program electronic commerce, for displaying information on a product on the Internet connecting means 3a or 3b and requesting the settlement of product prices from the settlement server 2 when a product purchase order by an employee is received. The settlement server 2 is provided with an application program for settlement, which transfers either cyber money provided by the company server 7 for the benefit of employees or wages to a virtual account provided in the electronic commerce server 1 when a product price settlement is requested by the electronic commerce server 1, thereby performing the requested product price settlement. The company server 7 provides the cyber money paid for the purpose of benefit or as wages to the settlement server 2. The company server 7 is managed by an employer and refers to software and hardware for expressing various opinions of employees about management of the company and also collecting the various opinions of the employees through the Internet 5.

The employee benefit system is applicable to other networks such as a PSTN (public switched telephone network), a PSDN (packet switched data network), cable TV network, or a wireless communication network, in addition to the Internet 5. When the network is replaced, the network interface module of the network connecting means 3a or 3b, the electronic commerce server 1, the company server, and the settlement server 2, and a communication protocol in use are updated or added accordingly.

FIG. 2 is a detailed block diagram of the electronic commerce server of FIG. 1. Referring to FIG. 2, the electronic commerce server 1 includes a product data base 21 storing information on products, an information data base 22 storing various information needed for employees, an employee data base 23 storing information on the employees, a control module 20 for confirming login ID and password of an employee, and for providing various product information and requesting the settlement of product prices by the employee from the settlement server 2 when the employee purchases products, and a communication module 24 for exchanging necessary data with the outside.

The product information stored in the product data base 21 includes a list, prices, specifications, and images of all tangible and intangible products to be sold. Tangible products include items such as food, clothes, electronic products, furniture, and school supplies. Intangible products refer to services such as house-moving service and wedding preparation service. The information stored in the information data base 22 includes information related to and unrelated to the company, to be provided to employees, such as business schedules, vacation schedules, notices of hobby club meetings in the company, and information for purchasing a home. The employee information stored in the employee data base 23 includes information such as names, IDs, passwords, departmental information and position, contact numbers, e-mail addresses, bank name and accounts for settlement, and credit card information for settlement.

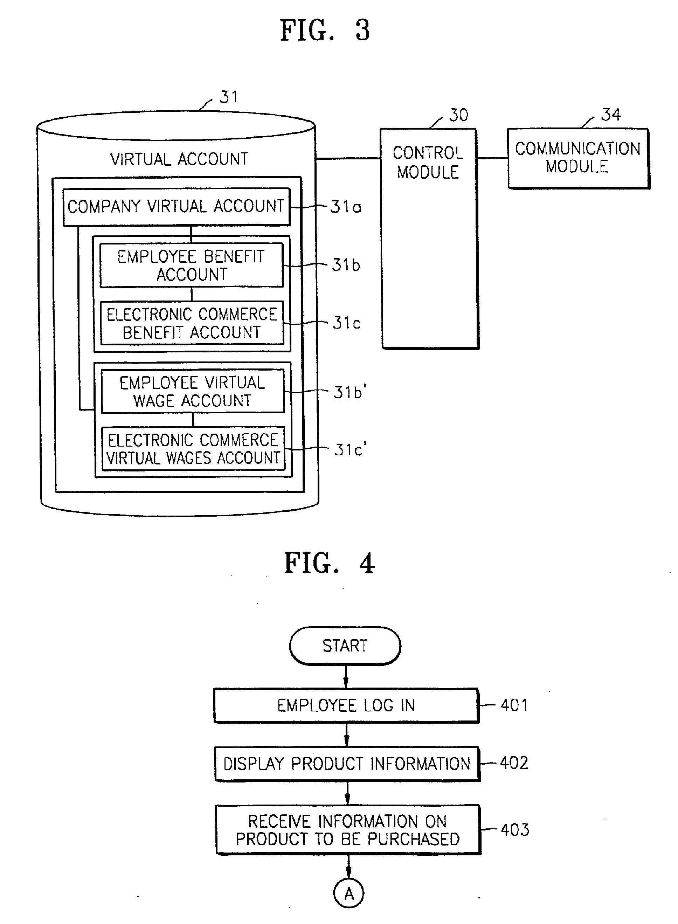

FIG. 3 is a detailed block diagram showing the settlement server 2 in FIG. 1. Referring to FIG. 3, the settlement server 2 includes a virtual account data base 31 storing virtual account information of the company, the employee, and an administrator of the electronic commerce server 1, a control module 30, and a communication module 34 for exchanging necessary data with the outside. The settlement server 2 operates as a virtual bank performing the same functions as actual banks, over the Internet 5, transferring cyber money between the company server 7, the employee virtual account and the virtual account of the administrator of the electronic commerce server 1 provided to the virtual account data base 31.

The virtual account data base 31 includes virtual account information of the company such as a company ID, a password, a virtual account number, and details of money received and drawn, virtual account information of the employee such as employee IDs, passwords, virtual account numbers, and details of money received and drawn, and virtual account information of the electronic commerce server 1 such as an electronic commerce server ID, a password, a virtual account number, and detail of money received and drawn. The control module 30 performs settlement by transferring cyber money required for settlement from the virtual account of the employee to the virtual account of the administrator of the electronic commerce server 1 at the request of the electronic commerce server 1 for the product price settlement.

In particular, the virtual account data base 31 is provided with a company virtual account 31 a, an employee benefit account 31 b and an employee virtual wages account 31 b', an electronic commerce benefit account 31 c, and an electronic commerce virtual wages account 31c'. Benefit cyber money provided by the company to the employee as a benefit allowance is stored in the employee benefit account 31 b. Wages cyber money provided by the company to the employee as wages is stored in the employee virtual wages account 31 b'.

The benefit cyber money and the wages cyber money are provided by the company server 7 to the settlement server 2 at predetermined time intervals through the Internet 5 and stored in the company virtual account 31a. This money is transferred to the employee benefit account 31 b and the employee virtual wages account 31b' from the company virtual account 31a at a predetermined time, such as a wages payment day, according to the instructions of the company server 7. The amount of the transferred benefit cyber money corresponds to the benefit allowance provided to each employee and the amount of the transferred wages cyber money provided to each employee. However, as described later, when the company transfers the wages to an account of the employee open in an actual bank offline, only the remainder of the wages after deducting the amount of the cyber money transferred to the electronic commerce virtual wages account 31 c' from the employee virtual wages account 31 b' as of the wages payment day is transferred, so that the employees accounts and the company's accounts are settled.

FIG. 4 is a flow chart for explaining the process of an employee logging into the electronic commerce server 1 and deciding to purchase a product.

Referring to FIG. 4, an employee who desires to purchase a product from an Internet electronic commerce site, which is operated by the electronic commerce server 1 of a particular company, connects to the electronic commerce server 1 through the Internet 5 via a PC or mobile phone (3a or 3b) and logs into the electronic commerce server 1 by inputting the ID and password stored in the employee data base 23 (Step 401). The home page of the electronic commerce site operated by the electronic commerce server 1 is displayed on the employees' PC or mobile phone. The employee searches the electronic commerce site. The control module 20 of the electronic commerce server 1 extracts product information from the product data base 21 and transmits the information via the communication module 24, so that the product information is displayed (Step 402). When the employee decides to purchase a product, the information on the chosen product is provided to the control module 20 of the electronic commerce server 1 via the communication module 24 of the electronic commerce server 1 (Step 403).

The steps of performing a benefit account settlement or a virtual wages account settlement as a product price settlement are described as follows.

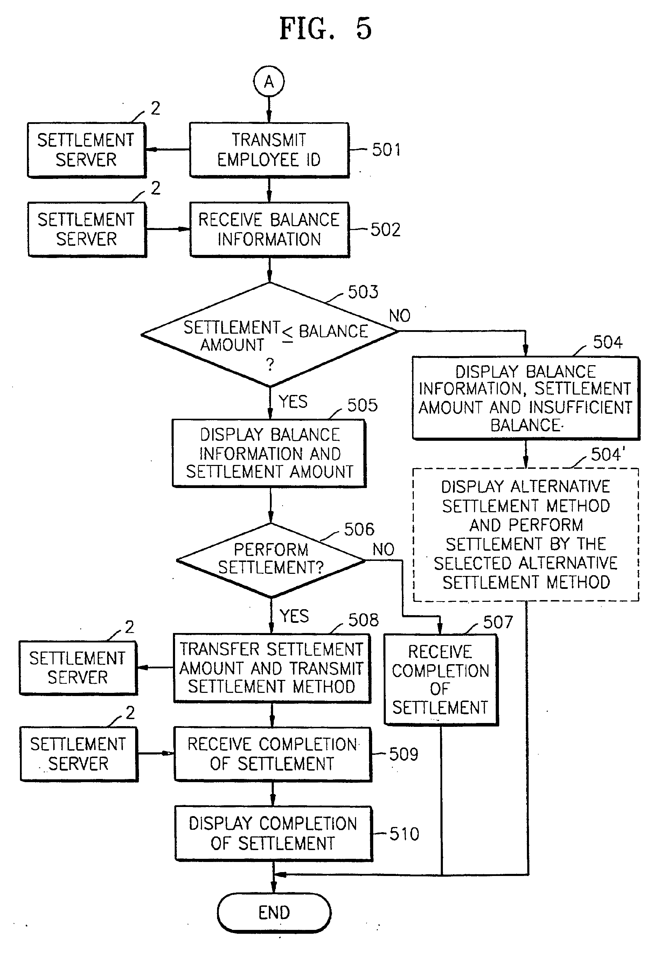

First, FIG. 5 is a flow chart for explaining the steps of the settlement of product prices performed at the electronic commerce server. Referring to the drawing, the control module 20 of the electronic commerce server 1 provided with the information on the product that the employee desires to purchase through the communication module 24 transmits the ID of the employee to the settlement server 2 (Step 501).

The control module 20 of the electronic commerce server 1 receives information on the balance of the corresponding employee from the settlement server 2 via the communication module 24 (Step 502) and compares the received balance information with the money required for settlement of product price (Step 503). When the money required for settlement is greater than the balance, the balance information and the money required for settlement are displayed on the Internet connecting means 3a or 3b along with an insufficient balance message (Step 504). Here, together with the insufficient balance message, a selection icon for selecting an alternative settlement means is displayed so that the entire amount or a lesser amount of money required for settlement can be transferred through the alternative settlement means (Step 504'). Selecting the alternative settlement means entails a direct money transfer or a settlement using a credit card. However, since the steps of the settlement of the total or a lesser amount of the product price through the alternative settlement means is not within the scope of the present invention, a detailed description thereof will be omitted.

The part of a product price that exceeds an employee's balance is settled by the balance remaining on the benefit account or the virtual wages account and selection of the alternative settlement means. The steps of the benefit account settlement or the virtual wages account settlement of only part of the total price are the same as the steps of the benefit account settlement or the virtual wages account settlement with respect to the entire amount required for settlement. Of course, each of the settlement steps through the alternative settlement means and the settlement using the virtual account (the benefit account settlement or the virtual wages account settlement) are formed to be performed for the convenience of the employee.

The balance information displayed in the above Step 504 and Step 505 (to be described later) is displayed according to the balance of the employee benefit account 31b and the virtual wages account 31b'.

When the money required for settlement is less than or equal to the balance, the control module 20 of the electronic commerce server 1 transmits balance information and the money required for settlement to the employee's PC or mobile phone (Step 505). A settlement method selection screen is displayed on the Internet connecting means 3a or 3b of the employee along with the balance information and the money required for settlement in Step 505, confirming whether or not the settlement has been performed (Step 506). The settlement method selecting screen (not shown) is provided with a selection icon and a transaction cancel icon so that either the benefit account settlement or the virtual wages account settlement can be selected. The employee executes settlement by clicking one of the selection icons or cancels the transaction by clicking the transaction cancel icon.

When the employee clicks the transaction cancel icon, the control module 20 of the electronic commerce server 1 displays the cancellation of the transaction (Step 507). As a result, the transaction is terminated.

When the employee clicks one of the selection icons to perform the settlement, the control module 20 of the electronic commerce server 1 transfers the amount for the settlement and the selected settlement method to the settlement server 2 through the communication module 24 (Step 508).

The control module 20 of the electronic commerce server 1 receives the completion of the settlement from the settlement server 2 through the communication module 24 (Step 509) and displays the completion of the product price settlement for the employee (Step 510).

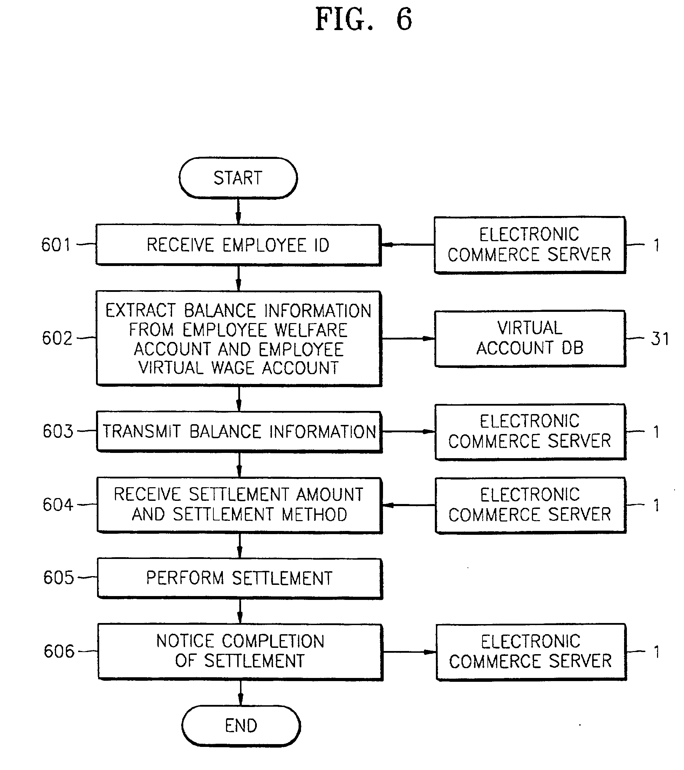

Next, referring to FIG. 6, the steps performed at the settlement server 2 to perform the product price settlement will be described.

The control module 30 of the settlement server 2 receives the ID of the employee through the communication module 34 (Step 601), accesses the appropriate benefit account 31b and the virtual wages account 31b' (from the virtual account data base 31) and extracts balance information (Step 602), and transmits the information to the electronic commerce server 1 (Step 603). Here, the balance information means the total amount of cyber money in both the employee benefit account 31 b and the employee virtual wages account 31 b'.

Next, the control module 30 of the settlement server 2 receives the money information required for settlement and the settlement method from the electronic commerce server 1 through the communication module 34 (Step 604), and performs the settlement according to the selected settlement method (Step 605). The settlement is divided into the benefit account settlement and the virtual wages account settlement, each of which will be described later.

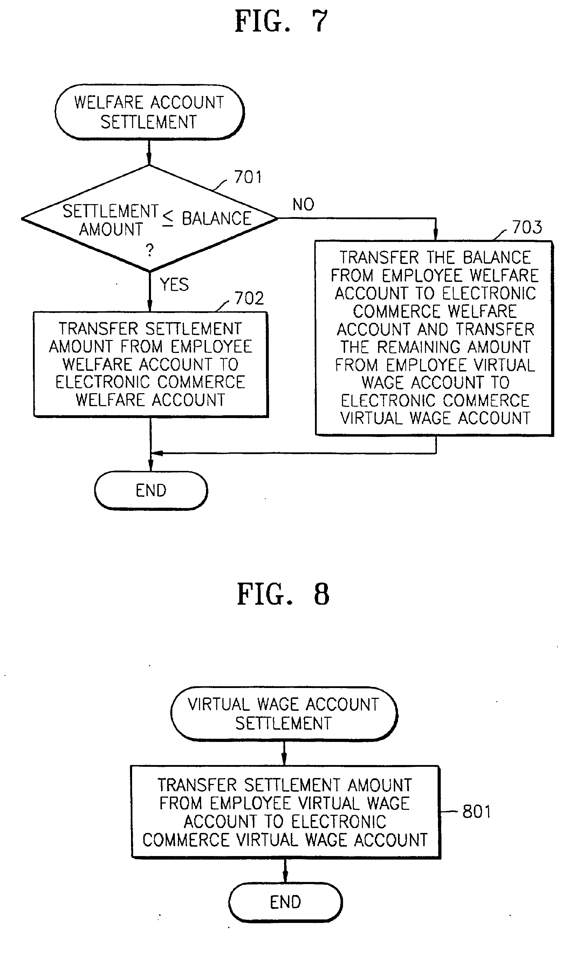

FIG. 7 a flow chart explaining in detail the steps of the benefit account settlement by the settlement server2. Referring to the drawing, the control module 30 of the settlement server 2 compares the balance of the employee benefit account 41 and the money required for settlement (Step 701). When the money required for settlement is less than or equal to the balance of the employee benefit account 31 b, the control module 30 accesses the virtual account data base 31 to transfer the cyber money required for settlement from the benefit account 31 b to the electronic commerce benefit account 31 c (Step 702). When the money required for settlement is greater than the balance of the employee benefit account 31 b, the control module 30 accesses the virtual account data base 31 and transfers the full balance of the employee benefit account 31 b to the electronic commerce benefit account 31c and transfers the remaining amount owing from the employee virtual wages account 31 b' to the electronic commerce virtual wages account 31 c' (Step 703).

FIG. 8 is a flow chart for explaining in detail the steps of the virtual wages account settlement by the settlement server 2. Referring to the drawing, the control module 30 of the settlement server 2 accesses the virtual account data base 31 to transfer the corresponding money required for settlement to the electronic commerce virtual wages account 31 c' from the employee virtual wages account 31b' (Step 801). After the completion of the settlement, the control module 30 of the settlement server 2 informs the electronic commerce server 1 that the settlement has been completed (Step 606).

The electronic commerce server 1 performs the settlement of accounts with the company server 7 based on the cyber money in the electronic commerce benefit account 31c and the electronic commerce virtual wages account 31c' of the settlement server 2.

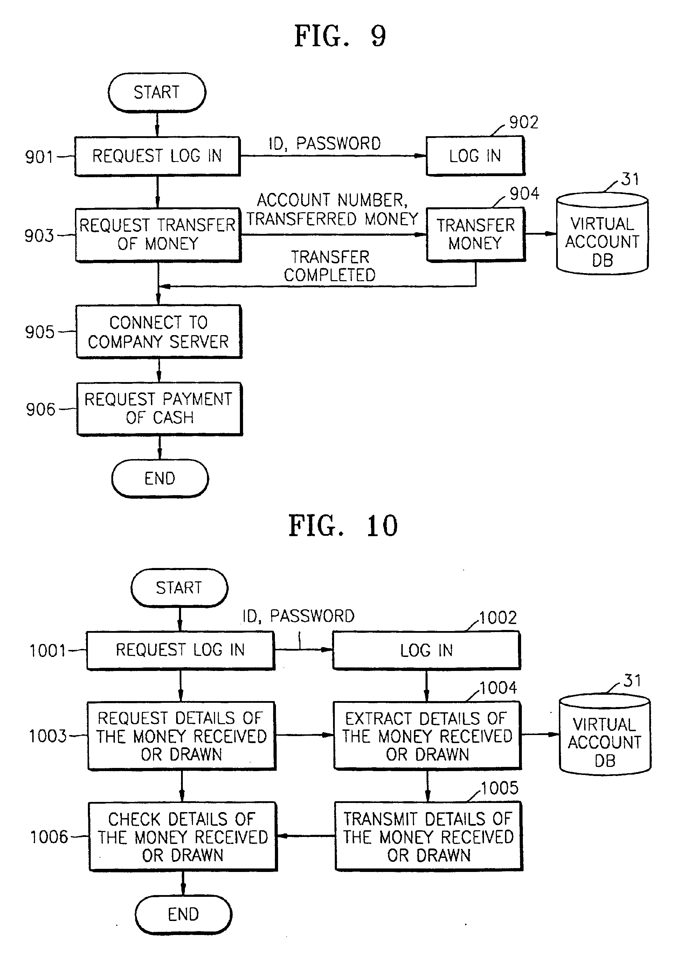

FIG. 9 is a flow chart explaining the steps of the settlement of accounts between the electronic commerce server 1 and the company server 7. Referring to the drawing, the control module 20 of the electronic commerce server 1 accesses the settlement server 2 and requests to log in by providing the ID and password of the electronic commerce server (Step 901). The settlement server 2 checks the ID and password of the electronic commerce server 1 and allows log-in (Step 902).

Next, the control module 20 of the electronic commerce server 1 transmits the account number of the electronic commerce benefit account 31c and/or the electronic commerce virtual wages account 31c', and transfers the money, and simultaneously, requests the transfer of money to the company virtual account 31 a (Step 903). The control module 30 of the settlement server 2 receiving the transferred money from the electronic commerce server 1 through the communication module 34 accesses the virtual account data base 31 to transfer the cyber money corresponding to the transferred money from the electronic commerce virtual wages account 31 c' to the company virtual account 31 a, and informs the electronic commerce server 1 of the completion of the transfer (Step 904). The control module 20 of the electronic commerce server 1, receiving the notice of the completion of transfer through the communication module 24, connects to the company server 7 (Step 905) and requests payment of cash corresponding to the transferred cyber money (Step 906).

FIG. 10 is a flow chart explaining the steps of the company server 7 accessing the settlement server 2 and checking the details of the money received and drawn on the company virtual account 31 a. Referring to the drawing, the company server 7 accesses the settlement server 2 and requests to log in by providing the ID and password of the company (Step 1001). The settlement server 2 checks the company ID and password and then allows logging in (Step 1002).

Next, the company server 7 requests the details of the money received and drawn (Step 1003). The control module 30 of the settlement server 2, receiving the request by the company for the details of the money received and drawn through the communication module 34, accesses the virtual account data base 31 and extracts the details of the money received and drawn (Step 1004) and transmits these extracted details to the company server 7 (Step 1005). Accordingly, the company server 7 can check the amount of the cyber money received from the electronic commerce server 1 (step 1006).

There are various methods for the company server 7 to pay the price corresponding to the amount of the cyber money which is transferred from the electronic commerce server 1 to the company virtual account 31 a. For example, cash can be deposited online or offline into an account of the electronic commerce server 1 opened at an actual bank, or cash can be deposited into the account of the electronic commerce server 1 at an actual bank in cooperation with a financial institution server performing the financial transaction of the actual bank. The time that the deposit is to be made may be determined in advance based on a contract established between the administrator of the electronic commerce server 1 and the administrator of the company server 7.

In particular, on the day when the company pays wages, cash can be deposited into a settlement account of the electronic commerce server 1 at an actual bank by accessing online a financial settlement server of the actual bank, or a corresponding amount of money can be deposited offline into the settlement account of the electronic commerce server 1 at the actual bank. Of course, the settlement of accounts is made possible by a direct transaction without using a bank. Also, other conventional settlement methods of accounts performed online and offline can be applied to the process and method of the settlement of accounts according to the present invention. Here, since the settlement of accounts performed online or offline is not within the scope of the present invention, a detailed description thereof will be omitted.

The employee can also check the details of the money received by or drawn on his account by directly logging into the settlement server 2 and providing the account number of the virtual account stored in the virtual account data base 31. The detailed steps thereof are the same as those performed by the company, which are described above with reference to FIG. 10.

Although, in the above first preferred embodiment, two employee's virtual accounts are provided at the virtual account data base 31 so that the benefit cyber money and the wages cyber money are separately stored, an employee's virtual account and a virtual account of the electronic commerce server 1 are provided so that the benefit cyber money and the wages cyber money can be stored in the same virtual account and transferred.

Also, cash can be transferred between the accounts at the actual bank corresponding to the virtual account when the cyber money is transferred between the virtual accounts in real time engagement with the settlement server 2 and the financial institution server of the actual bank. In this case, it is advantageous that the above settlement of accounts is not additionally needed.

The electronic commerce server 1 is configured such that a product price can be settled by the alternative settlement means, independent of or along with the settlement by the settlement server 2. Accordingly, the employee can settle through another settlement means even when the balance of the employee benefit account 31 b and the employee virtual wages account 31b' is sufficient for the product price settlement.

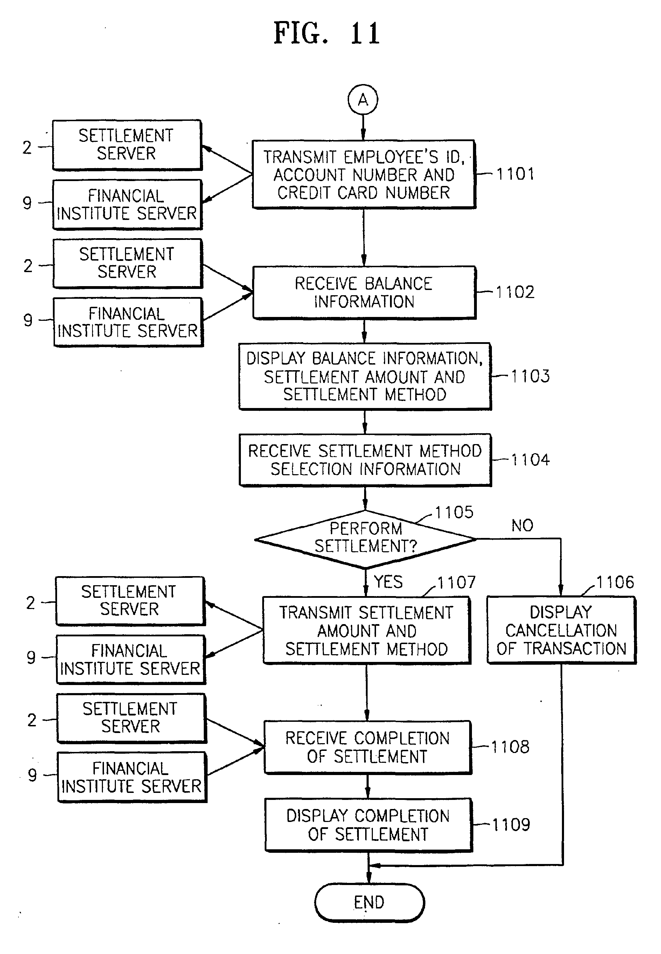

FIG. 11 is a flow chart explaining the steps of the settlement performed at the electronic commerce server adopting a method of transferring cash directly from the employee's account at an actual financial institution, and a credit card settlement method as an alternative settlement means.

Referring to FIG. 11, the control module 20 of the electronic commerce server 1 receiving the information on the product to be purchased through the communication module 24 transmits the employee ID to the settlement server 2 and extracts the account number and credit card number of the employee from the employee data base 23 and transmits the same to the financial institution server 9 (Step 1101). Here, the financial institution server 9 is a server for handling the financial transactions of the actual financial institution where the account of the employee is, and for handling the financial transactions of the credit card company issuing the credit card.

The control module 20 of the electronic commerce server 1 receives the information on the balance of a corresponding employee or the permissibility of a settlement by credit card, and the maximum amount available for the settlement using a particular credit card from the settlement server 2 and the financial institution server 9, through the communication module 24 (Step 1102).

The control module 20 of the electronic commerce server 1 displays a settlement means selection screen indicating the settlement means that can be selected , along with the received balance information and money required for settlement (Step 1103).

The settlement means selection screen may look like the table below.

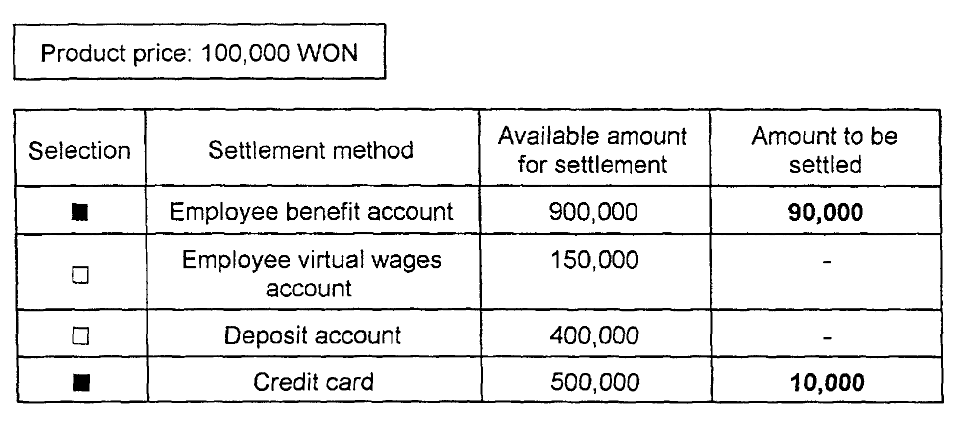

It can be seen that, with respect to the product price of 100,000 Won, the employee selects a method of paying 90,000 Won drawn on the employee benefit account 31 b and 10,000 Won using a credit card.

The settlement method selection information selected by the employee is transmitted to the control module 20 through the communication module 24 (Step 1104). The control module 20 displays a settlement execution confirmation screen (not shown) in which the settlement method and the amount to be settled selected by the employee are displayed for the employee, thereby confirming settlement execution (Step 1105). On the settlement execution screen, a transaction execution icon and a transaction cancellation icon are provided, and the employee clicks one of the icons so as to execute or cancel the transaction.

When the employee clicks the transaction cancellation icon, the control module 20 of the electronic commerce server 1 displays an indication that the transaction is canceled on the employee's Internet connecting means 3a or 3b (Step 1106). As a result, the transaction is terminated.

When the employee clicks the transaction execution icon to perform the settlement, the control module 20 of the electronic commerce server 1 transmits the money required for settlement and the selected settlement method to the settlement server 2 through the communication module 24 and transfers the money required for settlement to the financial institution server 9 (Step 1107).

The control module 20 of the electronic commerce server 1 receives the completion of the settlement notification from the settlement server 2 and the financial institution server 9 through the communication module 24 (Step 1108), and displays an indication that the settlement of the product price has been completed for the employee (Step 1109).

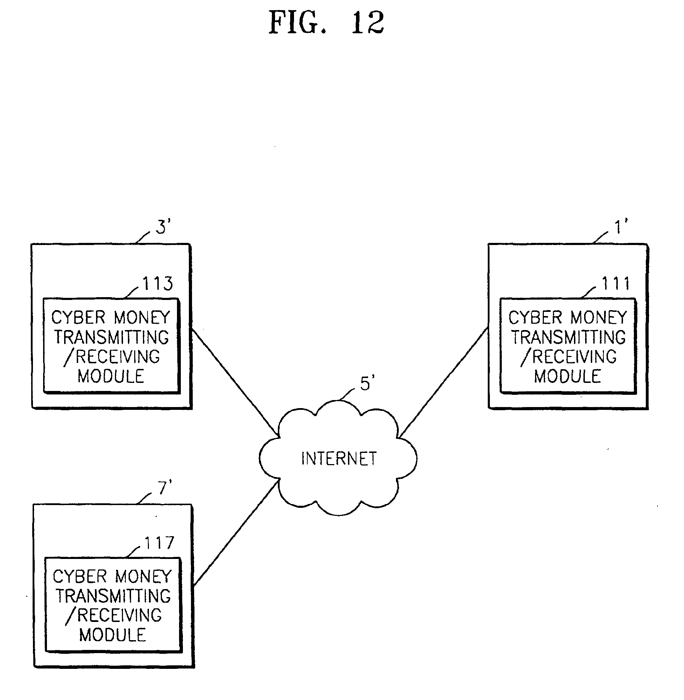

FIG. 12 shows an Internet based employee benefit system adopting an electronic commerce server according to a second preferred embodiment of the present invention. Here, descriptions of elements having the same functions as elements in the first preferred embodiment will be omitted.

Referring to FIG. 12, the Internet based employee benefit system includes a plurality of employee's connecting means 3', such as PCs or mobile phones for connecting to an electronic commerce server 1' through an Internet 5', access to the server 1' being provided only to members of a predetermined company, the electronic commerce server 1' being connected to the Internet 5' and loaded with an application program for electronic commerce displaying product information over the Internet and receiving cyber money from the employee as the price of products the employee desires to purchase, and a company server 5' for providing the cyber money to the Internet connecting means 3'. Here, the company server 7' is managed by officials of the company and includes both software and hardware for providing various information about the management of the company to the employees and collecting opinions from the employees.

The employee benefit system can be used through other networks in addition to the Internet 5, for example, PSTN, PSDN, a cable TV network and a wireless communication network. When the network is altered, the employee's network connecting means 3', the electronic commerce server 1', a network interface module of the company server 7', and communication protocol also need to be altered or added.

The employee's Internet connecting means 3', the company server 7', and the electronic commerce server 1' are provided with cyber money transmitting/receiving modules 113, 117 and 111, respectively. Cyber money is electronic money which is digital data with a predetermined encryption method applied to it, and is transferred from the company server 7' to the employee's Internet connecting means 3' as benefit compensation or part of wages. The employee previously sets the range of wages to be paid in the electronic money and the company server 7' transmits the cyber money to each employee based thereon. Alternatively, the cyber money can be provided to the employee offline stored in a storage medium.

In the electronic commerce method according to the second preferred embodiment of the present invention having the above structure, the employee logs into the electronic commerce server 1' through the Internet connecting means 3', and searches for information about products. If the employee wishes to purchase a product, he transmits the cyber money corresponding to the price of the product to the electronic commerce server 1 through the cyber money transmitting/receiving module 113 so that settlement of the product price is performed.

The electronic commerce server 1' receives the cyber money according to the product price through the cyber money transmitting/receiving module 111 for the settlement of accounts which then transmits the cyber money back through the cyber money transmitting/receiving module 111 to the company server 7'. The company server 7' receives the cyber money through the cyber money transmitting/receiving module 117 and provides an actual amount corresponding to the cyber money to the electronic commerce server 1' for the settlement of accounts. As a method for the settlement of accounts, any applicable methods described in the first preferred embodiment can be used.

According to the second preferred embodiment, privacy with regard to the details of the money received and paid by the employee can be guaranteed. Also, it is advantageous that there is no need to run an additional settlement server. Instead, installing the cyber money transmitting/receiving modules 111, 113 and 117 at the electronic commerce server 1', the employee Internet connecting means 3' and the company server 7', respectively, is needed.

It is noted that this innovation is not exclusively limited to the apparatus, objectives, and functions described above. It is apparent that variations and modifications can be made within the scope of the present innovation as defined in the appended claims.

As described above, according to the present invention, a network based electronic commerce server, an electronic commerce method, a settlement server and a settlement method are provided so that a more efficient benefit system can be established by a company. Also, an employee can easily purchase desired products and settle the price of products conveniently.

Accordingly, the efficiency of a benefit system provided by the company is improved and the employees will also be more satisfied with the company. Consequently, the employee's productivity and loyalty to the company are improved.

## Claims

1. A network based electronic commerce server comprising:
an employee data base containing information about employees of a predetermined company;
a product data base containing information about a plurality of products; and
a control module for receiving cyber money provided by the company to an employee, the cyber money to be used by the employee listed in the employee data base to purchase a product listed in the product data base online.

2. The network based electronic commerce server as claimed in claim 1, wherein the cyber money is transferred from a server of the company and stored in a virtual account of the employee provided at a virtual account data base of a server for the settlement of the product price, and
wherein the control module connects to the settlement server to receive the cyber money required to purchase settlement for the product by transferring the cyber money required to purchase the product from the employee's virtual account to a virtual account for the electronic commerce server, provided at the virtual account data base.

3. The network based electronic commerce server as claimed in claim 2, wherein the control module connects to the settlement server to transfer a predetermined amount of cyber money from the electronic commerce server's virtual account to a virtual account of the company provided at the virtual account data base of the settlement server, and then connects to the company server to request payment of cash corresponding to the transferred cyber money.

4. The network based electronic commerce server as claimed in claim 1, wherein the control module receives the cyber money transferred from an employee's network connecting means.

5. A network based electronic commerce method comprising the steps of:
transmitting information about a plurality of products to an employee of a company's network connecting means;
receiving a request by the employee to purchase at least one product among the products from the network connecting means; and
receiving cyber money provided to the employee by the company as at least part of the money required for settlement of the price of the product.

6. The network based electronic commerce method as claimed in claim 5, wherein the cyber money is transferred from a server of the company and stored on a virtual account of the employee provided at a virtual account data base of a server for settlement, and the step of receiving the cyber money comprises the sub-steps of:
requesting the settlement server to transfer cyber money corresponding to at least part of the money required for settlement from the employee's virtual account to an electronic commerce virtual account provided at the virtual account data base; and
receiving from the settlement server a notice of the completion of transfer to the electronic commerce virtual account.

7. The network based electronic commerce method as claimed in claim 6, further comprising the steps of:
requesting the settlement server to transfer a predetermined amount of cyber money from the electronic commerce virtual account to the company virtual account provided at the virtual account data base of the settlement server;
receiving from the settlement server a notice of the completion of transfer to the company virtual account; and
requesting the company server to pay cash corresponding to the transferred cyber money.

8. The network based electronic commerce method as claimed in claim 5, wherein the step of receiving the cyber money further comprises the sub-steps of:
before receiving the cyber money, receiving information on the balance of the employee's virtual amount from the settlement server which performs the settlement with the cyber money, receiving information on the balance of a deposit account from employees' respective financial institutions, and receiving appropriate information for settlement by an employee's credit card from the issuing financial institution;
transmitting to the network connecting means the money required for settlement information, the cyber money balance information, the deposit account balance information, the permissibility of credit card settlement information, and the available amount for settlement information; and
receiving a request from the network connecting means for settlement with cyber money with respect to at least part of the money required for settlement.

9. The network based electronic commerce method as claimed in claim 8, wherein the step of receiving the cyber money further comprises a sub-step of, after receiving the cyber money, receiving a request from the network connecting means for settlement by money transfer from the deposit account or settlement by credit card for a remaining part of the amount of money required for settlement, which is not requested to be paid in cyber money.

10. The network based electronic commerce method as claimed in claim 8, wherein the cyber money includes benefit cyber money provided by the company to the employee as benefit allowance and wages cyber money provided as wages, being stored as an employee's benefit account and employee's virtual wages account, respectively,
wherein, in the step of receiving a request for settlement by cyber money, when the balance of the employee's benefit account is less than the money required for settlement, a request is received from the network connecting means for settlement by either money transfer from the deposit account or settlement by credit card thereby covering the remaining amount necessary for settlement.

11. The network based electronic commerce method as claimed in claim 5, wherein the cyber money includes benefit cyber money provided by the company to the employee as benefit allowance and wages cyber money provided as wages, the benefit cyber money being stored in an employee's benefit account which is an employee's virtual account, and the wages cyber money being stored in an employee's virtual wages account which is an employee's virtual account, and
wherein the step of receiving the cyber money comprises the steps of:
receiving information on the balance of the employee's benefit account and the employee's virtual wages account:
when the balance of the employee's benefit account is greater than or equal to the money required for settlement, sending a request to the settlement server to transfer the appropriate cyber money required for settlement from the employee's benefit account to the electronic commerce virtual account provided at the virtual account data base, and when the balance of the employee's benefit account is less than the money required for settlement, and sending a request to the settlement server to transfer all of the cyber money in the employee's benefit account to the electronic commerce virtual account provided at the virtual account data base, along with a request for the employee's virtual wages account to transfer the appropriate cyber money needed to cover the remaining amount; and
receiving a notice of the completion of transfer from the settlement server.

12. The network based electronic commerce method as claimed in claim 11, further comprising a step of transmitting the balance information to the network connecting means.

13. The network based electronic commerce method as claimed in claim 6, wherein the cyber money includes benefit cyber money provided by the company to the employee as benefit allowance and wages cyber money provided as wages, the benefit cyber money being stored in an employee's benefit account which is an employee's virtual account, and the wages cyber money being stored in an employee's virtual wages account which is an employee's virtual account, and
wherein the step of receiving the cyber money comprises the steps of:
receiving information on the balance of the employee's benefit account and the employee's virtual wages account:
when the balance of the employee's benefit account is greater than or equal to the money required for settlement, requesting the settlement server to transfer cyber money corresponding to the money required for settlement from the employee's benefit account to the electronic commerce virtual account provided at the virtual account data base, and when the balance of the employee's benefit account is less than the money required for settlement, requesting the settlement server to transfer all of the cyber money in the employee's benefit account to the electronic commerce virtual account provided at the virtual account data base, and requesting the transfer of the cyber money corresponding to the remaining amount of money required for settlement from the employee's virtual wages account to the electronic commerce virtual account; and
receiving a notice of the completion of transfer from the settlement server.

14. The network based electronic commerce method as claimed in claim 5, wherein in the step of receiving the cyber money, the cyber money is transferred from the employee's network connecting means.

15. A network based settlement server comprising:
a virtual account data base including an employee's benefit account which is an employee's virtual account containing cyber money provided by a predetermined company as benefit allowance, and an electronic commerce benefit account which is a virtual account of an electronic commerce server for selling products to the employee;
a communication module for exchanging information with the electronic commerce server through a network; and
a control module accessing the virtual account data base to transfer cyber money corresponding to the money required for settlement of the price of a product that the employee desires to purchase from the electronic commerce server from the employee's benefit account to the electronic commerce benefit account based on information for settlement provided by the electronic commerce server through the communication module.

16. The network based settlement server as claimed in claim 15, further comprising an employee's virtual wages account where cyber money provided by the company as wages is deposited, and wherein the control module transfers cyber money corresponding to the money required for settlement of the price of a product that the employee purchased from the electronic commerce server, from the virtual wages account to the electronic commerce benefit account, based on the information received through the communication module from the electronic commerce server.

17. The network based settlement server as claimed in claim 16, further comprising an electronic commerce virtual wages account which is a virtual account of the electronic commerce server, whereby the control module transfers cyber money corresponding to the money required for settlement from the employee's virtual wages account to the electronic commerce virtual wages account.

18. The network based settlement server as claimed in claim 15, wherein the settlement information includes the employee's ID, password and the information of the money required for settlement.

19. A network based settlement method comprising the steps of:
providing a virtual account data base including an employee's benefit account which is a virtual account of the employee containing cyber money provided by a predetermined company to the employee as benefit allowance, and an electronic commerce benefit account which is a virtual account of an electronic commerce server for selling products to the employee;
receiving a request for the money required for settlement of the price of a product that the employee purchases from the electronic commerce server; and
transferring cyber money corresponding to the money required for settlement from the employee's benefit account to the electronic commerce benefit account.

20. The network based settlement method as claimed in claim 19, wherein the virtual account data base further comprises an employee's virtual wages account containing cyber money provided by the company to the employee as wages, and, in the step of transferring the cyber money, the cyber money corresponding to the money required for settlement is transferred from the virtual wges account to the electronic commerce benefit account.

21. The network based settlement method as claimed in claim 20, wherein the virtual account data base further comprises an electronic commerce virtual wages account which is a virtual account of the electronic commerce server, and, in the step of transferring the cyber money, the cyber money corresponding to the money required for settlement is transferred from the employee's virtual wages account to the electronic commerce virtual wages account.
